# EUROPÄISCHE PATENTSCHRIFT

(11) **EP 2 925 552 B1**
(45) Veröffentlichungstag und Bekanntmachung des Hinweises auf die Patenterteilung: **08.01.2020**
(21) Anmeldenummer: 13799242.6
(22) Anmeldetag: 22.11.2013
(51) Int. Cl.: B60K 37/06

(54) **BEDIENVERFAHREN UND BEDIENSYSTEM IN EINEM STRASSENFAHRZEUG**
OPERATING METHOD AND OPERATING SYSTEM IN A ROAD VEHICLE
PROCÉDÉ DE COMMANDE ET SYSTÈME DE COMMANDE DANS UN VÉHICULE AUTOMOBILE

(30) Priorität: 30.11.2012 DE 102012023484
(43) Veröffentlichungstag der Anmeldung: 07.10.2015
(73) Patentinhaber: Volkswagen Aktiengesellschaft, 38440 Wolfsburg (DE)
(72) Erfinder: MICHAELIS, Jan, 14193 Berlin (DE); JUN, Mi-Ran, 12059 Berlin (DE); PETERSEN, Sönke, 12205 Berlin (DE); BUDZYNSI, Tobias, 13503 Berlin (DE)
(86) Internationale Anmeldenummer: PCT/EP2013/074462
(87) Internationale Veröffentlichungsnummer: WO 2014/082926

(56) Entgegenhaltungen:
- WO-A1-2009/127522
- DE-A1-102010 042 326
- FR-A1- 2 915 017

## Beschreibung

Die vorliegende Erfindung betrifft ein Bedienverfahren und ein Bediensystem in einem Straßenfahrzeug. Bei dem Bedienverfahren werden auf einer ersten Anzeigefläche, die im Innenraum des Fahrzeugs im Blickfeld einer Person angeordnet ist, die auf einem Fahrersitz des Fahrzeugs sitzt, erste Graphikdaten angezeigt. Auf einer zweiten Anzeigefläche, die getrennt von der ersten Anzeigefläche in Reichweite der Person angeordnet ist, die auf dem Fahrersitz des Fahrzeugs sitzt, werden zweite Graphikdaten angezeigt. Des Weiteren werden Eingaben über eine berührungsempfindliche Oberfläche, die auf der zweiten Anzeigefläche ausgebildet ist, erfasst und die ersten und/oder zweiten Graphikdaten werden in Abhängigkeit von diesen Eingaben geändert. Das erfindungsgemäße Bediensystem weist eine solche erste und zweite Anzeigefläche auf. Ferner weist das Bediensystem eine Steuervorrichtung auf, die mit der ersten und der zweiten Anzeigefläche gekoppelt ist, mittels welcher Graphikdaten für die Anzeigen auf den Anzeigeflächen erzeugbar sind und mittels welcher Eingaben über die berührungsempfindliche Oberfläche erfassbar sind.

Ursprünglich wurden die verschiedenen in einem Kraftfahrzeug vorgesehenen Einrichtungen über separate Bedienelemente bedient. Beispielsweise gab es Drehschalter zum Einstellen der Lüftung sowie der Temperatur, Schalter zum Einstellen der verschiedenen Lüftungsdüsen, Schalter zum Bedienen der Beleuchtungseinrichtungen für den Innenraum des Fahrzeugs, entsprechende Schalter für die Beleuchtungs- und Scheinwerfereinrichtungen außen am Fahrzeug und Bedienelemente für ein Radio oder einen CD-Spieler. Bei modernen Kraftfahrzeugen sind mittlerweile so viele Einrichtungen zum Einstellen verschiedener Fahrzeugfunktionen, Informationssysteme, einschließlich Fahrerassistenzsysteme und Unterhaltungssysteme, vorgesehen, dass es nicht mehr zweckmäßig ist, für alle Fahrzeugeinrichtungen separate Bedienelemente vorzusehen. Aus diesem Grund erfolgt die Bedienung der vielfältigen Fahrzeugeinrichtungen über ein einheitliches Bedienkonzept mit wenigen Bedienelementen, die in Verbindung mit einer Anzeigevorrichtung bedient werden.

Die Bedienung der verschiedenen Einrichtungen des Fahrzeugs und die Aufnahme der angezeigten Informationen, die von diesen Einrichtungen geliefert werden, sollen jedoch die Aufmerksamkeit des Fahrers des Straßenfahrzeugs so wenig wie möglich beanspruchen. Es ist daher wünschenswert, die Informationen im Straßenfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann. Die Art der Bedienung und die mit der Bedienung verbundene Informationsdarstellung in einem Straßenfahrzeug trägt somit zur Sicherheit beim Führen dieses Fahrzeugs bei.

Aus der DE 10 2007 029 602 A1 ist ein Verfahren und eine Vorrichtung zum Bedienen in einer in einem Fahrzeug befindlichen Einrichtung bekannt. Bei dem in dieser Druckschrift beschriebenen Verfahren werden vor einem Mitfahrer des Fahrzeugs auf eine Projektionsfläche die Bedienfelder und die Anzeige einer Einrichtung im Fahrzeug projiziert und die Benutzereingaben erfasst. Entsprechend umfasst die Vorrichtung eine Projektionseinrichtung und mindestens eine Projektionsfläche, die mit optischen oder drucksensitiven Sensoren zur Erfassung von Benutzereingaben ausgestattet ist, die zu einer Einrichtung im Fahrzeug übertragen werden.

Aus der DE 10 2008 023 405 A1 ist ein Kraftfahrzeug und ein Display zur Darstellung veränderlicher Informationen und einem räumlich getrennt von dem Display angeordneten Bedienfeld mit zumindest zwei Bedienelementen zur Bedienung zumindest je einer Funktion des Kraftfahrzeugs bekannt. In diesem Fall umfasst das Kraftfahrzeug eine Anzeigesteuerung zur Anzeige eines in Abhängigkeit von der Ausrichtung einer Hand eines Bedieners zu dem Bedienfeld ausgerichteten Abbildes des Bedienfeldes in einem mittels des Display abgebildeten Displaybereich.

Aus der DE 10 2006 043 208 A1 ist ein Touchscreen bekannt, der eine sensitive Bedienfläche zum Einstellen bestimmter Funktionen aufweist. Um die Bedienung zu vereinfachen, ist wenigstens ein mechanisches Stellelement über der sensitiven Bedienfläche angeordnet, das einen Auslöser aufweist, der bei einem Bewegen des Stellelements auf die sensitive Bedienfläche zur Funktionseinstellung einwirkt.

Schließlich ist aus der DE 10 2007 052 343 A1 ein Verfahren zum Anzeigen von Daten in einem Fahrzeug bekannt, bei dem in einem ersten Anzeigebereich einer Anzeigevorrichtung Informationen dargestellt werden, die Einrichtungen des Fahrzeugs betreffen, und in einem zweiten Anzeigebereich der oder einer weiteren Anzeigevorrichtung Prozesse visualisiert werden, die in Einrichtungen des Fahrzeugs ablaufen. In diesem Fall ist der erste Anzeigebereich im primären Sichtbereich des Fahrers des Fahrzeugs angeordnet. Der zweite Anzeigebereich ist hingegen außerhalb des primären Sichtbereichs des Fahrers angeordnet. Er ist in Reichweite des Fahrers angeordnet. Die Anzeigevorrichtung, welche diesen Anzeigebereich bereitstellt, ist insbesondere als Touchscreen ausgestaltet, d. h. es ist eine berührungsempfindliche Oberfläche vorgesehen. Schließlich ist in Reichweite des Fahrers noch ein separates mechanisches Bedienelement vorgesehen, wie z. B. ein Dreh-Drück-Schalter.

Die Dokumente FR 2 915 017 A1 und DE 10 2010 042326 A1 zeigen den Oberbegriff des Anspruchs 1.

Es ist die Aufgabe der vorliegenden Erfindung, ein Bedienverfahren und ein Bediensystem der eingangs genannten Art bereitzustellen, die eine einfache, schnelle und intuitive Bedienung und Informationsaufnahme in einem Straßenfahrzeug ermöglicht.

Erfindungsgemäß wird diese Aufgabe durch ein Bedienverfahren mit den Merkmalen des Anspruchs 1 und ein Bediensystem mit den Merkmalen des Anspruchs 7 gelöst. Vorteilhafte Ausgestaltungen und Weiterbildungen ergeben sich aus den abhängigen Ansprüchen.

Das erfindungsgemäße Bedienverfahren ist dadurch gekennzeichnet, dass auf der zweiten Anzeigefläche bei einem Eingabevorgang ein erstes Fenster mit Schaltflächen für Eingaben angezeigt wird und zumindest ein zweites Fenster angeschnitten angezeigt wird, in dem graphische Objekte enthalten sind, die den Eingaben zugeordnet sind, und dass durch einen Bedienvorgang das angeschnitten angezeigte Fenster zur vollständigen Anzeige und das erste Fenster zu einer angeschnittenen Anzeige gebracht wird.

Bei dem erfindungsgemäßen Verfahren erfolgt somit die Bedienung über die berührungsempfindliche Oberfläche der zweiten Anzeigefläche. Dabei können auf dieser zweiten Anzeigefläche Graphikdaten angezeigt werden, welche die Bedienung unterstützen. Beispielsweise können sogenannte Schaltflächen angezeigt werden. Die erste Anzeigefläche dient hingegen bei dem erfindungsgemäßen Bedienverfahren nur der Anzeige von Informationen. Auf diese Weise kann ein Eingabevorgang von einer geteilten Anzeige auf den beiden Anzeigeflächen unterstützt werden, wobei die zweite Anzeigefläche den Nutzer bei der Ausführung der einzelnen Eingabeschritte unterstützt und die erste Anzeigefläche eine Vorschau anzeigt, welche sich in Abhängigkeit von den einzelnen Einzeleingabeschritten ergibt. Auf diese Weise wird eine sogenannte Live-Vorschau auf der ersten Anzeigefläche für Eingaben dargestellt, die auf der berührungsempfindlichen Oberfläche der zweiten Anzeigefläche ausgeführt werden.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbaren Anzeigefläche erzeugt und von dieser angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Erst bei einer Auswahl der Schaltfläche wird die ihr zugeordnete Funktion ausgeführt.

Durch die Anordnung der ersten Anzeigefläche im Blickfeld des Fahrers und der separaten zweiten Anzeigefläche in Reichweite des Fahrers können auf der zweiten Anzeigefläche insbesondere Schaltflächen für häufig genutzte Funktionen angezeigt werden. Auf der ersten Anzeigefläche können hingegen Anzeigeelemente dargestellt werden, die insbesondere der Fahrer des Straßenfahrzeugs häufig im Blick behalten muss.

Die erste Anzeigefläche ist insbesondere im primären Sichtbereich des Fahrers des Straßenfahrzeugs angeordnet. Dieser "primäre Sichtbereich" wird üblicherweise so definiert, dass die Blickrichtung des Fahrers um einen Winkelbereich in einer vertikalen, in Fahrzeuglängsrichtung angeordneten Ebene um einen bestimmten Winkel α nach unten bzw. nach oben von der Horizontalen, welche die Augen des Fahrers schneidet, abweicht. Der primäre Sichtbereich des Fahrers ist dabei so definiert, dass der Winkel α kleiner als 30°, insbesondere kleiner als 20° ist. Um die erste Anzeigefläche zu betrachten, muss der Fahrer somit seinen Blick weniger als 30° bzw. 20° von der Horizontalen nach unten wenden. Dabei geht man von einer Durchschnittsgröße des Fahrers aus.

Die zweite Anzeigefläche ist hingegen in Reichweite eines Fahrzeuginsassen, der sich auf einer Sitzposition des Straßenfahrzeugs befindet, angeordnet. Diese Reichweite umfasst den Bereich, den der Fahrzeuginsasse, insbesondere der Fahrer, der eine durchschnittliche Größe aufweist, ohne weiteres, d. h. ohne oder nur mit einer geringen Veränderung seiner Position, in einer Stellung, die er normalerweise im Fahrzeug einnimmt, erreichen kann. Um die berührungsempfindliche Oberfläche der zweiten Anzeigefläche zu berühren muss sich der Fahrzeuginsasse somit überhaupt nicht oder nur geringfügig vorbeugen.

Bei dem erfindungsgemäßen Bedienverfahren wird durch die Anzeige auf der ersten Anzeigefläche der Nutzer bei der Bedienung der berührungsempfindlichen Oberfläche unterstützt, indem z. B. Graphiken dargestellt werden, welche von dem Betätigungsvorgang auf der berührungsempfindlichen Oberfläche beeinflusst werden. Der Fahrer des Straßenfahrzeugs muss daher während der Betätigung nur kurzzeitig auf die erste Anzeigefläche blicken, die in seinem Blickfeld angeordnet ist, um den Betätigungsvorgang zu überprüfen. Gleichzeitig kann er den Betätigungsvorgang auf der berührungsempfindlichen Oberfläche der zweiten Anzeigefläche ausführen, die in seiner Reichweite angeordnet sind. Es ist daher möglich, für die erste Anzeigefläche eine optimale Positionierung im Straßenfahrzeug zu wählen, die im Blickfeld des Fahrers liegt, ohne berücksichtigen zu müssen, dass diese Anzeigefläche in Reichweite des Fahrers liegt. Ferner kann die zweite Anzeigefläche so im Straßenfahrzeug positioniert werden, dass sie optimal vom Fahrer mit seiner Hand erreicht werden kann. Die Größe der Blickabwendung des Fahrers zu der zweiten Anzeigefläche ist in diesem Fall von untergeordneter Bedeutung, da der Betätigungsvorgang insbesondere mittels der ersten Anzeigefläche visualisiert wird. Dennoch ist es möglich, den Nutzer durch eine Anzeige auf der zweiten Anzeigefläche bei der Bedienung zu unterstützen. Hierdurch kann die Sicherheit beim Führen eines Kraftfahrzeugs erhöht werden, da während der Betätigung nur eine geringfügige Abwendung der Blickrichtung vom Fahrgeschehen erfolgen muss. Gleichzeitig wird sichergestellt, dass die Schaltflächen, die vom Fahrer manuell betätigt werden, für den Fahrer sehr gut erreichbar sind, so dass er seine Sitzposition während des Betätigungsvorgangs nicht oder nur geringfügig verändern muss.

Gemäß einer Ausgestaltung des erfindungsgemäßen Bedienverfahrens betrifft der Eingabevorgang eine Suche innerhalb einer Menge von Datensätzen. Mit jedem Einzeleingabeschritt verändert sich die Treffermenge. Entsprechend visualisiert die dem Eingabevorgang zugeordnete Vorschau die Treffermenge nach dem letzten Einzeleingabeschritt. Der Nutzer erkennt auf der ersten Anzeigefläche somit unmittelbar die Auswirkungen eines Einzeleingabeschrittes, obwohl der Eingabevorgang noch nicht vollständig durchgeführt worden ist. Beispielsweise verringert sich die auf der ersten Anzeigefläche visualisierte Treffermenge mit jedem Einzeleingabeschritt. Diese Anzeige der Treffermenge wird dabei auf einer Anzeigefläche dargestellt, die getrennt von der Anzeigefläche ist, welche die berührungsempfindliche Oberfläche aufweist und mittels welcher der Bedienvorgang beispielsweise durch die Anzeige von Eingabeschaltflächen, wie beispielsweise einer Tastatur, unterstützt wird.

Auf der ersten Anzeigefläche wird beispielsweise eine geographische Karte angezeigt. Auf der zweiten Anzeigefläche werden beispielsweise Schaltflächen für eine Eingabe eines Navigationssystems angezeigt. Nach jedem Einzeleingabeschritt werden Objekte des Navigationssystems ermittelt, die sich aus den bisherigen Einzeleingabeschritten des Eingabevorgangs ergeben. Die geographischen Positionen der ermittelten Objekte des Navigationssystems werden dann in der geographischen Karte auf der ersten Anzeigefläche angezeigt. Beispielsweise können bei der Zieleingabe des Navigationssystems auf der geographischen Karte mögliche Ziele angezeigt werden, die zu den bisherigen Einzeleingabeschritten passen. Die Anzahl der Ziele wird sich dann mit jedem Einzeleingabeschritt verringern. Dies wird dem Nutzer auf der ersten Anzeigefläche in der geographischen Karte visualisiert. Die Anzeige der geographischen Karte im Blickfeld des Nutzers wird dabei nicht von den angezeigten Schaltflächen für die Zieleingabe gestört.

Gemäß einer Ausgestaltung des erfindungsgemäßen Bedienverfahrens wird in dem zweiten Fenster eine Liste mit Listeneinträgen angezeigt, welche in Abhängigkeit von den bisherigen Einzeleingabeschritten ermittelt worden ist. Auch diese Listeneinträge verändern sich dann in Abhängigkeit von den weiteren Einzeleingabeschritten.

Durch einen Bedienvorgang kann der Nutzer das angeschnitten angezeigte Fenster zur vollständigen Anzeige und das erste Fenster zu einer angeschnittenen Anzeige bringen. Bildlich ausgedrückt schiebt der Nutzer das bisher angeschnitten angezeigte Fenster über das erste Fenster, von dem daraufhin nur noch ein Teil sichtbar ist. Die in dem ersten Fenster angezeigten Schaltflächen können jedoch weiterhin bedient werden. Des Weiteren ist es möglich, dass von der zweiten Anzeigefläche mehrere angeschnittene Fenster dargestellt werden. In diesem Fall können insbesondere die Schaltflächen in einem angeschnitten angezeigten Fenster bedient werde.

Das erfindungsgemäße Bediensystem ist dadurch gekennzeichnet, dass bei einem Eingabevorgang, der mehrere Einzeleingabeschritte umfasst, mittels der Steuervorrichtung während oder nach einem Einzeleingabeschritt für die erste Anzeigefläche Graphikdaten für eine dem Eingabevorgang zugeordnete Vorschau erzeugbar und anzeigbar sind. Das erfindungsgemäße Bediensystem ist insbesondere ausgebildet, das vorstehend beschriebene Bedienverfahren auszuführen. Es bietet daher dieselben Vorteile wie das erfindungsgemäße Bedienverfahren.

Bei dem erfindungsgemäßen Bediensystem ist die erste Anzeigefläche insbesondere so im Innenraum des Fahrzeugs angeordnet, dass die Blickrichtung der Person, die auf einem Fahrersitz des Fahrzeugs sitzt, um einen Winkelbereich in einer vertikalen, in Fahrzeuglängsrichtung angeordneten Ebene um einen Winkel α nach unten von einer Horizontalen, welche die Augen des Fahrers schneidet, abweicht, der kleiner als 30° ist.

Die Erfindung betrifft schließlich ein Straßenfahrzeug mit einem solchen Bediensystem. Das Bediensystem ist insbesondere in einem Kraftfahrzeug vorgesehen.

Die Erfindung wird nun anhand eines Ausführungsbeispiels mit Bezug zu den Zeichnungen erläutert.
- Figur 1: zeigt schematisch ein Ausführungsbeispiel des erfindungsgemäßen Bediensystems und
- Figuren 2 bis 11: zeigen Anzeigen auf den Anzeigeflächen des Bediensystems, die von einem Ausführungsbeispiel des erfindungsgemäßen Verfahrens erzeugt werden.

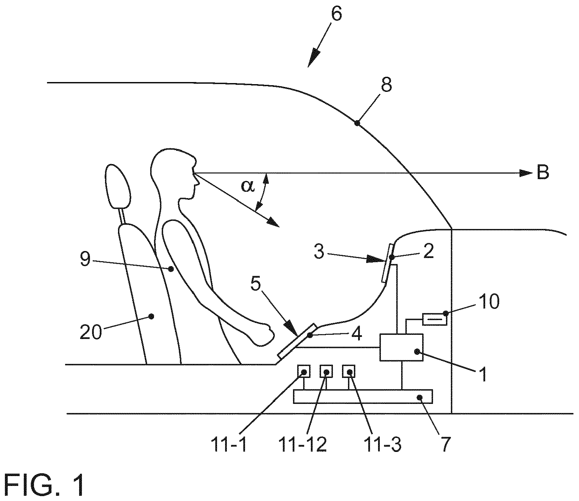

Zunächst wird der prinzipielle Aufbau des erfindungsgemäßen Bediensystems mit Bezug zu Figur 1 erläutert:
Das Bediensystem umfasst eine zentrale Steuervorrichtung 1. Diese ist mit einer ersten Anzeigevorrichtung 2 gekoppelt, welche eine Anzeigefläche 3 aufweist. Die Steuervorrichtung 1 erzeugt erste Grafikdaten, die auf der Anzeigefläche 3 angezeigt werden können. Die Anzeigefläche 3 kann von einem Display, insbesondere einem Flüssigkristalldisplay oder einem Plasmadisplay, beliebiger Bauart bereitgestellt werden. Ferner kann die Anzeigefläche 3 von einem Display mit organischen Leuchtdioden bereitgestellt werden. Die Anzeigefläche 3 kann dabei entweder eben oder gewölbt ausgeführt sein.

Die erste Anzeigefläche 3 ist möglichst weit oben, z. B. unmittelbar unterhalb dem Beginn der Windschutzscheibe 8 des Fahrzeugs 6 angeordnet. Die Anzeigefläche 3 liegt damit im primären Sichtbereich des Fahrers 9. Dieser "primäre Sichtbereich" wird üblicherweise so definiert, dass die Blickrichtung B des Fahrers 9, der auf dem Fahrersitz 20 sitzt, von einem Winkelbereich in einer vertikalen, in Fahrzeuglängsrichtung angeordneten Ebene um einen bestimmten Winkel α nach unten bzw. nach oben von der Horizontalen, welche die Augen des Fahrers 9 schneidet, abweicht. Der primäre Sichtbereich des Fahrers 9 ist dabei so definiert, dass der Winkel α kleiner als 30°, insbesondere kleiner als 20° ist. Um die Anzeigefläche 3 zu betrachten, muss der Fahrer 9 somit seinen Blick um weniger als 30° bzw. 20° von der Horizontalen nach unten wenden. Dabei geht man von einer Durchschnittsgröße des Fahrers 9 aus.

Des Weiteren ist die Steuervorrichtung 1 mit einer zweiten Anzeigevorrichtung 4 verbunden, welche eine zweite Anzeigefläche 5 bereitstellt. Die zweite Anzeigefläche 5 ist separat von der ersten Anzeigefläche 3 angeordnet. Die Steuervorrichtung 1 erzeugt für die zweite Anzeigefläche 5 zweite Grafikdaten zur Informationsdarstellung. Die zweite Anzeigevorrichtung 4 umfasst eine berührungsempfindliche Oberfläche auf der Anzeigefläche 5, so dass ein so genannter Touchscreen bereitgestellt wird, insbesondere ein kapazitiver oder ein resistiver Touchscreen. Auf der zweiten Anzeigefläche 5 werden insbesondere Schaltflächen gezeigt, welche der Bedienung dienen.

Die zweite Anzeigefläche 5 mit der berührungsempfindlichen Oberfläche ist in Reichweite des Fahrers 9 angeordnet. Die Reichweite umfasst den Bereich, den der auf dem Fahrersitz 20 sitzende Fahrer 9, der eine durchschnittliche Größe aufweist, ohne weiteres, d. h. ohne oder nur mit einer geringen Veränderung seiner Position, in einer Stellung, die er normalerweise beim Fahren einnimmt, greifen kann. Um die berührungsempfindliche zweite Anzeigefläche 5 zu berühren, muss sich der Fahrer 9 somit insbesondere überhaupt nicht oder nur geringfügig vorbeugen.

Auch die zweite Anzeigefläche 5 kann von einem Display, insbesondere einem Flüssigkristalldisplay oder einem Plasmadisplay, beliebiger Bauart bereitgestellt werden. Sie wird jedoch insbesondere von einem Display mit organischen Leuchtdioden bereitgestellt. In diesem Fall ist es möglich, dass die zweite Anzeigefläche 5 biegbar bzw. flexibel ausgeführt ist.

Die Steuervorrichtung 1 ist ferner mit einem Datenbus 7 des Fahrzeugs 6 gekoppelt. Die Einrichtungen 11-1, 11-2, 11-3 des Fahrzeugs 6, welche mittels den Anzeigevorrichtungen 2 und 4 bedient werden sollen, sind auch mit diesem Datenbus 7 gekoppelt. Beispielsweise kann ein Navigationssystem 11-1, ein Multimediasystem 11-2 und eine Telekommunikationseinrichtung 11-3 vorgesehen sein. Ferner ist es auch möglich, dass einige Fahrzeugeinrichtungen 11-1, 11-2, 11-3 direkt mit der Steuervorrichtung 1 gekoppelt sind. Von den Fahrzeugeinrichtungen 11-1, 11-2, 11-3 werden Daten gegebenenfalls über den Datenbus 7 an die Steuervorrichtung 1 übertragen. Dort werden die Daten verarbeitet. Es werden ferner Grafikdaten erzeugt, die von den Anzeigeflächen 3 und 5 der Anzeigevorrichtungen 2 und 4 grafisch wiedergegeben werden. Dabei werden auf der Anzeigefläche 5 Informationen angezeigt, die in direkter Verbindung mit der Bedienung über die berührungsempfindliche Oberfläche dieser Anzeigefläche 5 oder über weitere Bedienelemente stehen. Auf der Anzeigefläche 3 werden unter anderem Informationen angezeigt, welche die Betätigungen visualisieren.

Schließlich ist die Steuervorrichtung 1 mit einem Speicher 10 verbunden, aus welchem Daten ausgelesen werden können. Auf dem Speicher 10 können vielfältige Daten, die für die Verarbeitung der von der Steuervorrichtung 1 empfangenen Daten erforderlich sind, gespeichert sein.

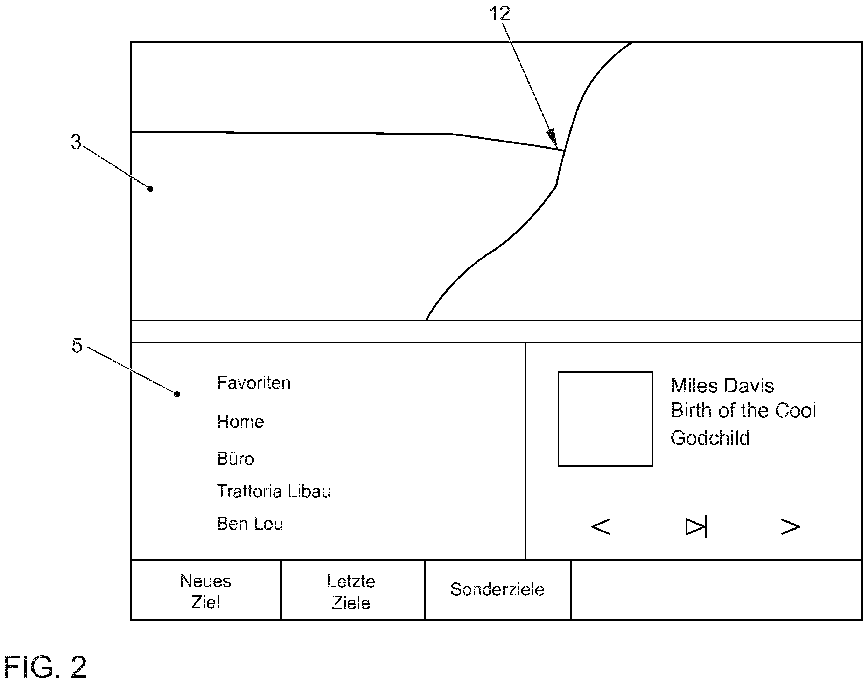

Im Folgenden wird das erfindungsgemäße Bedienverfahren mit Bezug zu den Figuren 2 bis 11 erläutert. Das Bedienverfahren kann von dem vorstehend beschriebenen Bediensystem ausgeführt werden.

In Figur 2 ist eine Anzeige von den Anzeigeflächen 3 und 5 gezeigt, bei der auf der ersten Anzeigefläche 3 eine geographische Karte 12 angezeigt wird und auf der zweiten Anzeigefläche 5 eine Anzeige, die den Einrichtungen 11-1, 11-2, 11-3 zugeordnet sind. Diese Anzeige umfasst Schaltflächen zum Steuern der Musikwiedergabe, Schaltflächen zur Auswahl von Kontakten und Schaltflächen des Navigationssystems 11-1. Die Schaltflächen können über die berührungsempfindliche Oberfläche auf der zweiten Anzeigefläche 5 gesteuert werden.

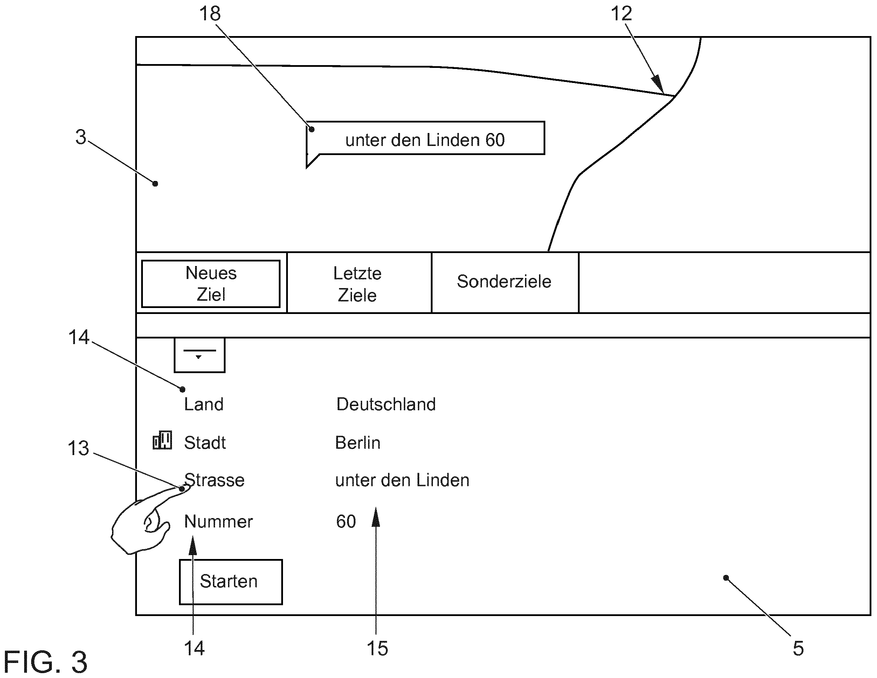

In Figur 3 ist die Darstellung auf den Anzeigeflächen 3 und 5 gezeigt, die nur dem Navigationssystem 11-1 zugeordnet ist. Als Ausgangspunkt ist in Figur 3 eine Anzeige wiedergegeben, bei welcher das Navigationssystem 11-1 eine bestimmte Zieladresse gespeichert hat. Diese Zieladresse wird auf der zweiten Anzeigefläche 5 in einer rechten Spalte 15 angegeben.

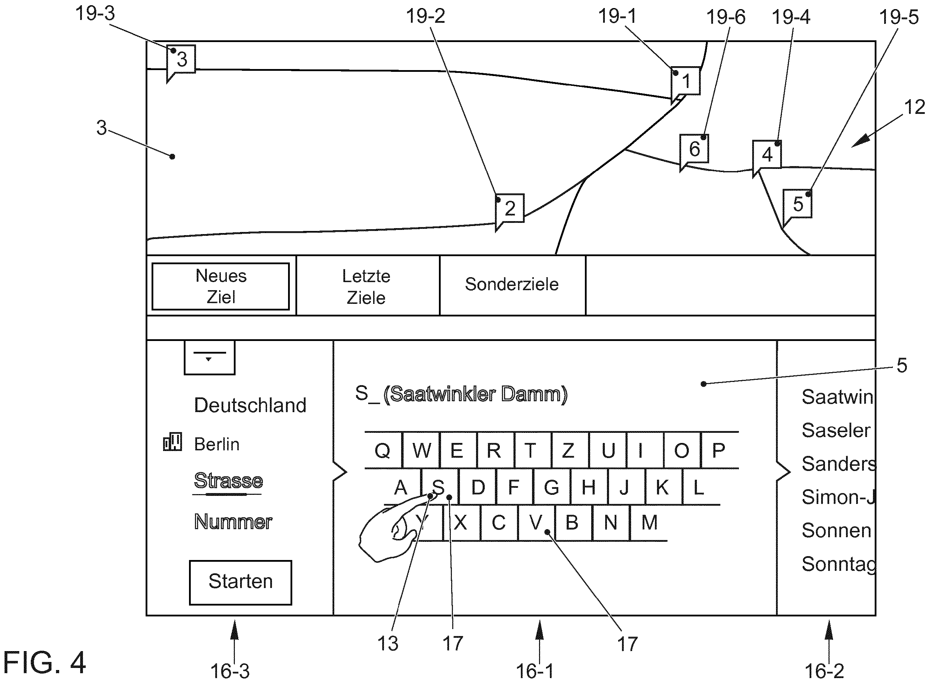

Wenn der Nutzer nun die aktuelle Zieladresse ändern und eine neue Zieladresse eingeben will, berührt er zunächst die berührungsempfindliche Oberfläche bei einer der Schaltflächen, die in einer linken Spalte 14 angezeigt werden. In dem in Figur 3 gezeigten Beispiel berührt der Nutzer beispielsweise mit seiner Fingerspitze 13 die Schaltfläche "Strasse". Daraufhin wird, wie in Figur 4 gezeigt, von der zweiten Anzeigefläche 5 eine Schaltflächentastatur 17 angezeigt. Die Schaltflächentastatur 17 befindet sich in einem mittleren Fenster 16-1 der Anzeige auf der zweiten Anzeigefläche 5. Rechts neben dem Fenster 16-1 wird ein weiteres Fenster 16-2 angeschnitten angezeigt, das heißt das Fenster und der Inhalt des Fensters sind nur teilweise zu erkennen. Gleichermaßen wird links neben dem Fenster 16-1 ein weiteres Fenster 16-3 angeschnitten angezeigt. In diesem Fenster 16-3 werden bereits getätigte Eingaben zu der Zieladresse angezeigt sowie die noch einzugebenden Angaben.

Berührt nun der Nutzer beispielsweise mit seiner Fingerspitze 13 den Buchstaben S auf der Schaltflächentastatur 17, werden von der Steuervorrichtung 1, gegebenenfalls in Verbindung mit dem Speicher 10 oder dem Navigationssystem 11-1, die Objekte des Navigationssystems 11-1 ermittelt, die sich aus der Betätigung des Buchstabens S auf der Schaltflächentastatur 17 ergeben. Dabei ist die Betätigung des Buchstabens S ein Einzeleingabeschritt eines Eingabevorgangs, mit welchem eine neue Zieladresse für das Navigationssystem 11-1 eingegeben wird. Im vorliegenden Fall sind die Objekte des Navigationssystems 11-1, die diesem Einzeleingabeschritt zugeordnet sind, alle Straßennamen der bereits ausgewählten Stadt Berlin, die mit einem S beginnen. Diese Straßennamen werden als Liste in dem Fenster 16-2 angezeigt. Da das Fenster 16-2 angeschnitten dargestellt wird, sind auch nur die Anfänge der jeweiligen Straßennamen sichtbar.

Des Weiteren erzeugt die Steuervorrichtung 1 für diesen Einzeleingabeschritt, das heißt die Eingabe des Buchstabens S, Graphikdaten für eine Vorschau für die Darstellung auf der ersten Anzeigefläche 3. Im vorliegenden Fall werden die geographischen Positionen der Straßennamen ermittelt, die mit S beginnen. Diese geographischen Positionen werden anhand von graphischen Objekten 19-1 bis 19-6 innerhalb der geographischen Karte 12 auf ersten Anzeigefläche 3 dargestellt. Auf der ersten Anzeigefläche 3 wird somit eine unmittelbare Vorschau für Eingaben auf der berührungsempfindlichen Oberfläche der zweiten Anzeigefläche 5 visualisiert.

Mit jedem weiteren Einzeleingabeschritt, das heißt mit jeder weiteren Eingabe eines Buchstabens für die Straße der Zieladresse, verändert sich die Treffermenge zu den bisherigen Einzeleingabeschritten. Entsprechend verändert sich die Liste in dem Fenster 16-2 und gleichzeitig die Darstellung der graphischen Objekte 19-1 bis 19-6 auf der ersten Anzeigefläche 3 als Vorschau für den Eingabevorgang. Im vorliegenden Fall werden immer weniger graphische Objekte 19-1 bis 19-6 innerhalb der geographischen Karte 12 angezeigt.

Es wird darauf hingewiesen, dass sich die Anzeige mit der Vorschau auf der ersten Anzeigefläche 3 im Wesentlichen simultan mit den Eingaben auf der berührungsempfindlichen Oberfläche
der zweiten Anzeigefläche 5 ändern. Die erste Anzeigefläche 3 bietet somit eine Live-Vorschau für die getätigten Eingaben.

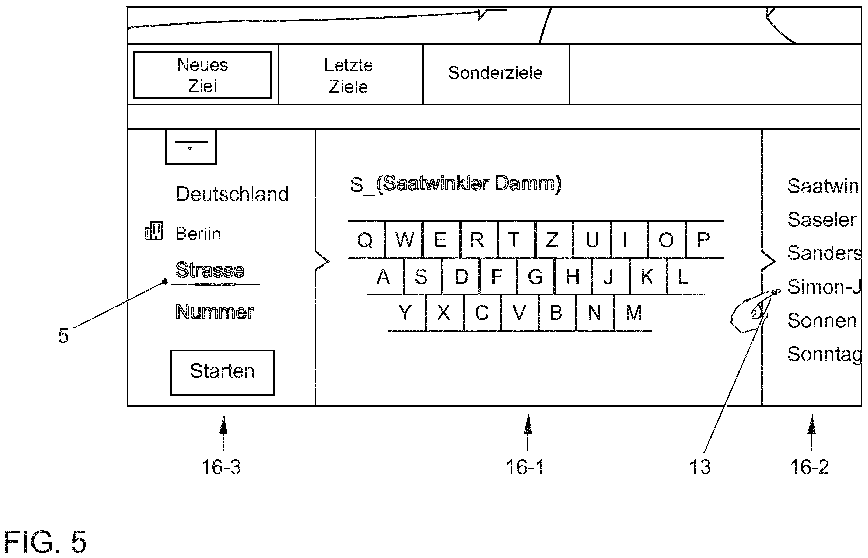

Außerdem kann der Nutzer das vollständig angezeigte Fenster der zweiten Anzeigefläche 5 verändern. Hierfür kann er beispielsweise, wie in Figur 5 gezeigt, die berührungsempfindliche Oberfläche der zweiten Anzeigefläche 5 mit der Fingerspitze im Bereich des Fensters 16-2 berühren und die Fingerspitze 13 anschließend in einer Wischgeste nach links ziehen.

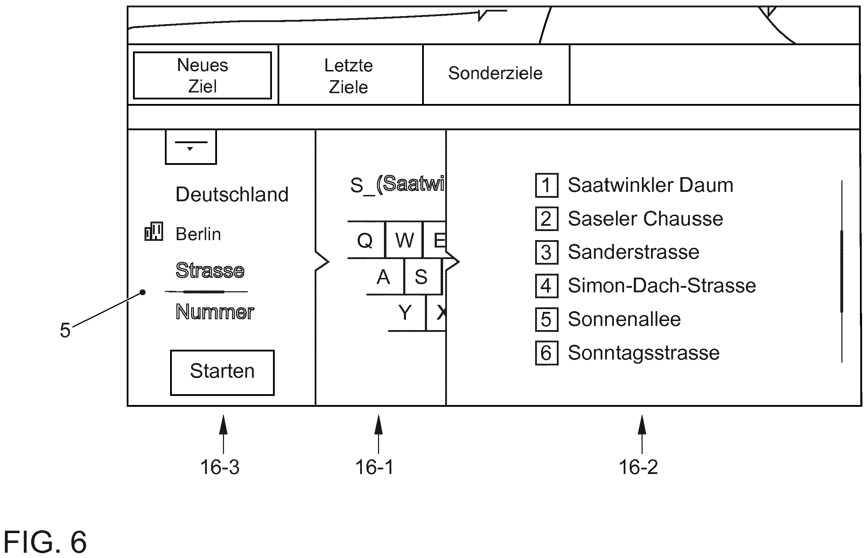

Daraufhin wird, wie in Figur 6 dargestellt, das Fenster 16-2 vollständig geöffnet und das Fenster 16-1 wird angeschnitten dargestellt. Bildlich ausgedrückt, wird das Fenster 16-2 über das Fenster 16-1 geschoben. Alle angezeigten Schaltflächen sind jedoch weiterhin bedienbar. Im Fenster 16-2 kann der Nutzer nun eine bestimmte Straße für die neue Zieladresse auswählen.

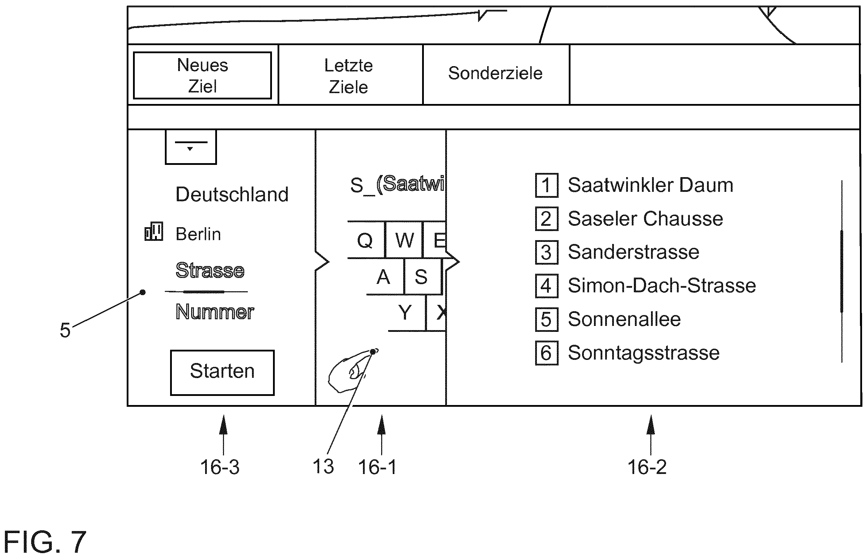

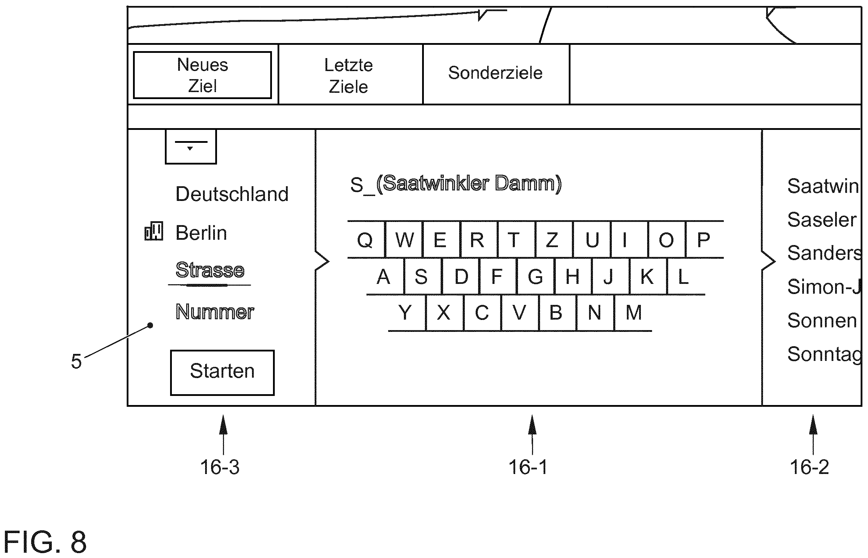

Der Nutzer kann jedoch auch durch Antippen des Fensters 16-1, wie es in Figur 7 gezeigt ist, zurück in die Ansicht gelangen, bei welcher das Fenster 16-1 vollständig gezeigt ist, wie es in Figur 8 dargestellt ist. Durch weitere Tastatureingaben kann er nun die Eingabe für die Straße für die neue Zieladresse vervollständigen.

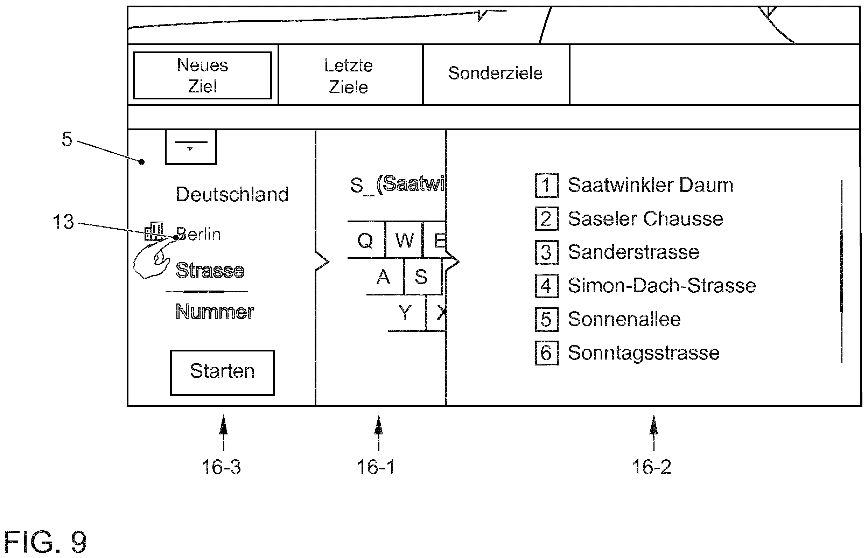

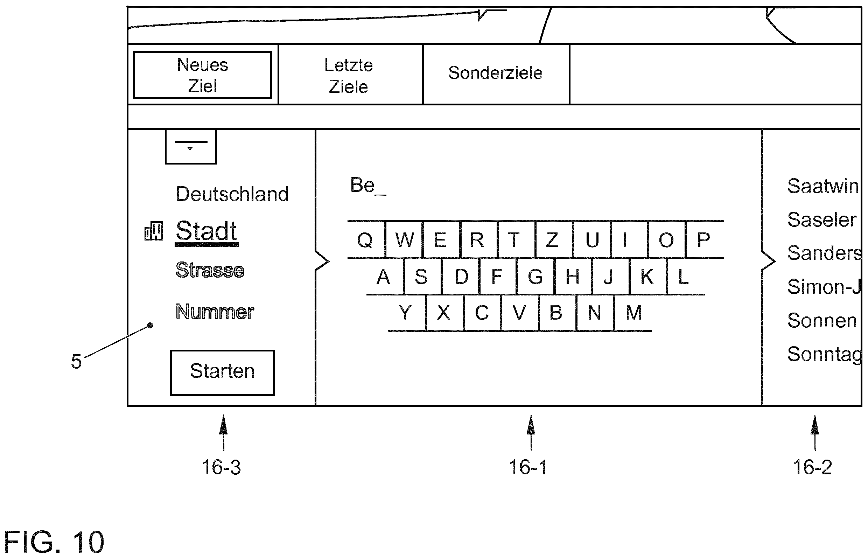

Außerdem kann der Nutzer auch eine bestimmte Schaltfläche im Fenster 16-3 betätigen, wie es in Figur 9 dargestellt ist. Wenn der Nutzer beispielsweise nicht die Straße der Zieladresse, sondern die Stadt der Zieladresse ändern will, betätigt er mit der Fingerspitze 13 die Schaltfläche "Berlin". Daraufhin kann im Fenster 16-1 der Name der Stadt für die Zieladresse des Navigationssystems 11-1 geändert werden, wie es in Figur 10 dargestellt ist.

Auf diese Weise kann der Nutzer die aktuelle Zieladresse des Navigationssystems 11-1 ändern.

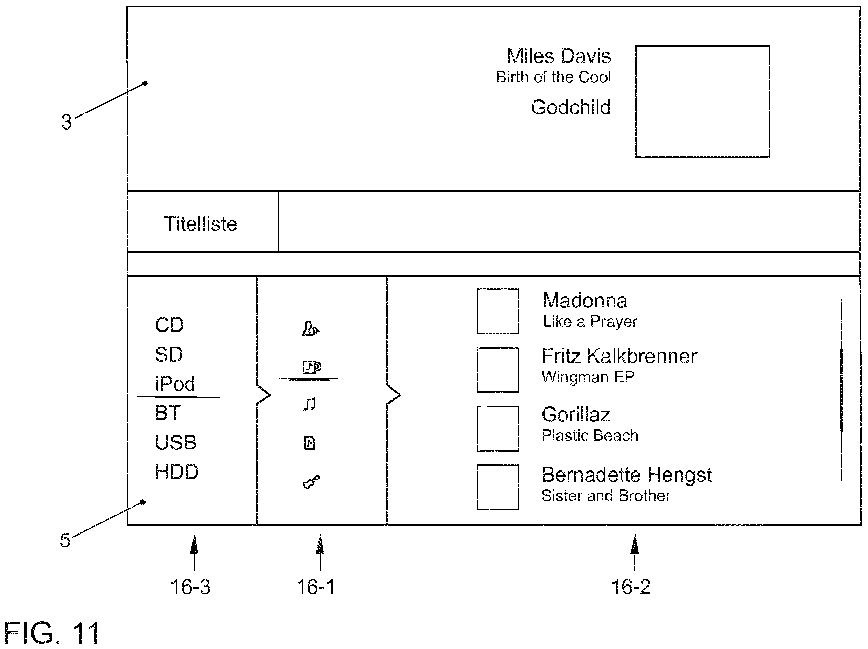

In Figur 11 ist ein weiteres Beispiel für Anzeigen auf den Anzeigeflächen 3 und 5 gezeigt, welche dem Multimediasystem 11-2 zugeordnet sind. Erneut wird von der zweiten Anzeigefläche 5 eine Darstellung mit drei Fenstern 16-1 bis 16-3 wiedergegeben, wobei zwei Fenster 16-1 und 16-3 angeschnitten dargestellt sind. Auf der ersten Anzeigefläche 3 wird eine unmittelbare Vorschau eines Eingabevorgangs wiedergegeben, bei dem über Einzeleingabeschritte ein bestimmtes Musikstück ausgewählt wird.

Auf diese Weise wird von dem erfindungsgemäßen Verfahren eine intuitive Darstellung des Bedienpfads erzeugt sowie eine intuitive Vorschau für die Einzeleingabeschritte. Ferner ist es möglich zwischen verschiedenen Anzeigehierarchien durch direkte Bedienung hin und her zu springen. Schließlich werden verschiedene Bedienhierarchien übersichtlich dargestellt.

### BEZUGSZEICHENLISTE

- 1: Steuervorrichtung
- 2: erste Anzeigevorrichtung
- 3: erste Anzeigefläche
- 4: zweite Anzeigevorrichtung
- 5: zweite Anzeigefläche
- 6: Straßenfahrzeug
- 7: Datenbus
- 8: Windschutzscheibe
- 9: Fahrer
- 10: Speicher
- 11-1: Navigationssystem
- 11-2: Multimediasystem
- 11-3: Telekommunikationssystem
- 12: geographische Karte
- 13: Fingerspitze des Nutzers
- 14: Liste
- 15: Liste
- 16-1 bis 16-3: Fenster
- 17: Schaltflächentastatur
- 18: graphisches Objekt
- 19-1 bis 19-6: graphische Objekte
- 20: Fahrersitz

## Patentansprüche

1. Bedienverfahren in einem Straßenfahrzeug (6), bei dem
- auf einer ersten Anzeigefläche (3), die im Innenraum des Fahrzeugs (6) im Blickfeld einer Person (9) angeordnet ist, die auf einem Fahrersitz (20) des Fahrzeugs (6) sitzt, erste Graphikdaten angezeigt werden,
- auf einer zweiten Anzeigefläche (5), die getrennt von der ersten Anzeigefläche (3) in Reichweite der Person (9) angeordnet ist, die auf dem Fahrersitz (20) des Fahrzeugs (6) sitzt, zweite Graphikdaten angezeigt werden, und
- Eingaben über eine berührungsempfindliche Oberfläche, die auf der zweiten Anzeigefläche (5) ausgebildet ist, erfasst werden und die ersten und/oder zweiten Graphikdaten in Abhängigkeit von diesen Eingaben geändert werden, wobei
- bei einem Eingabevorgang, der mehrere Einzeleingabeschritte umfasst, nach einem Einzeleingabeschritt erste Graphikdaten für eine Vorschau erzeugt werden, die dem Eingabevorgang zugeordnet sind, und
- die ersten Graphikdaten für die Vorschau auf der ersten Anzeigefläche (3) angezeigt werden,
**dadurch gekennzeichnet, dass**
- auf der zweiten Anzeigefläche (5) bei einem Eingabevorgang ein erstes Fenster (16-1) mit Schaltflächen (17) für Eingaben angezeigt wird und zumindest ein zweites Fenster (16-2) angeschnitten angezeigt wird, in dem graphische Objekte enthalten sind, die den Eingaben zugeordnet sind, und
- durch einen Bedienvorgang das angeschnitten angezeigte Fenster (16-2) zur vollständigen Anzeige und das erste Fenster (16-1) zu einer angeschnittenen Anzeige gebracht wird.

2. Bedienverfahren nach Anspruch 1,
**dadurch gekennzeichnet,**
**dass** der Eingabevorgang eine Suche innerhalb einer Menge von Datensätzen betrifft, dass sich mit jedem Einzeleingabeschritt die Treffermenge verändert und dass die dem Eingabevorgang zugeordnete Vorschau die Treffermenge nach dem letzten Einzeleingabeschritt visualisiert.

3. Bedienverfahren nach Anspruch 2,
**dadurch gekennzeichnet, dass**
- auf der ersten Anzeigefläche (3) eine geographische Karte (12) angezeigt wird und auf der zweiten Anzeigefläche (5) Schaltflächen (17) für eine Eingabe eines Navigationssystems (11-1) angezeigt werden,
- nach jedem Einzeleingabeschritt Objekte des Navigationssystems (11-1) ermittelt werden, die sich aus den bisherigen Einzeleingabeschritten des Eingabevorgangs ergeben, und
- die geographischen Positionen der ermittelten Objekte des Navigationssystems (11-1) in der geographischen Karte (12) auf der ersten Anzeigefläche (3) angezeigt werden.

4. Bedienverfahren nach einem der vorhergehenden Ansprüche,
**dadurch gekennzeichnet,**
**dass** in dem angeschnitten angezeigten Fenster (16-2) eine Liste mit Listeneinträgen angezeigt wird, welche in Abhängigkeit von den bisherigen Einzeleingabeschritten ermittelt worden ist.

5. Bedienverfahren nach einem der vorhergehenden Ansprüche,
**dadurch gekennzeichnet,**
**dass** auf der zweiten Anzeigefläche (5) mehrere angeschnittene Fenster (16-2,16-3) dargestellt werden.

6. Bedienverfahren nach einem der vorhergehenden Ansprüche,
**dadurch gekennzeichnet,**
**dass** Schaltflächen (17) in einem angeschnitten angezeigten Fenster (16-2, 16-3) bedienbar sind.

7. Bediensystem in einem Straßenfahrzeug (6) mit
- einer ersten Anzeigefläche (3), die im Innenraum des Fahrzeugs (6) im Blickfeld einer Person (9) angeordnet ist, die auf einem Fahrersitz (20) des Fahrzeugs (6) sitzt,
- einer zweiten Anzeigefläche (5), die getrennt von der ersten Anzeigefläche (3) im Innenraum des Fahrzeugs (6) in Reichweite der Person (9) angeordnet ist, die auf dem Fahrersitz (20) des Fahrzeugs (6) sitzt, und auf der eine berührungsempfindliche Oberfläche für Eingaben eines Nutzers ausgebildet ist, und
- einer Steuervorrichtung (1), die mit der ersten und der zweiten Anzeigefläche (3, 5) gekoppelt ist, mittels welcher Graphikdaten für die Anzeigen auf den Anzeigeflächen (3, 5) erzeugbar sind und mittels welcher Eingaben über die berührungsempfindliche Oberfläche erfassbar sind, wobei
- bei einem Eingabevorgang, der mehrere Einzeleingabeschritte umfasst, mittels der Steuervorrichtung (1) während oder nach einem Einzeleingabeschritt für die erste Anzeigefläche (3) Graphikdaten für eine dem Eingabevorgang zugeordnete Vorschau erzeugbar und anzeigbar sind,
**dadurch gekennzeichnet, dass**
- auf der zweiten Anzeigefläche (5) bei einem Eingabevorgang ein erstes Fenster (16-1) mit Schaltflächen (17) für Eingaben anzeigbar ist und zumindest ein zweites Fenster (16-2) angeschnitten anzeigbar ist, in dem graphische Objekte enthalten sind, die den Eingaben zugeordnet sind, und
- durch einen Bedienvorgang das angeschnitten angezeigte Fenster (16-2) zur vollständigen Anzeige und das erste Fenster (16-1) zu einer angeschnittenen Anzeige bringbar ist.

8. Bediensystem nach Anspruch 7,
**dadurch gekennzeichnet,**
**dass** die erste Anzeigefläche (3) so im Innenraum des Fahrzeugs (6) angeordnet ist, dass die Blickrichtung der Person (9), die auf einem Fahrersitz (20) des Fahrzeugs (6) sitzt, um einen Winkelbereich in einer vertikalen, in Fahrzeuglängsrichtung angeordneten Ebene um einen Winkel α nach unten von einer Horizontalen, welche die Augen des Fahrers schneidet, abweicht, der kleiner als 30° ist.

## Claims

1. An operating method in a road vehicle (6), wherein
- on a first display area (3), which is arranged in the interior of the vehicle (6) in the field of vision of a person (9) sitting on a driving seat (20) of the vehicle (6), first graphics data are displayed,
- on a second display area (5), which is arranged separate from the first display area (3) within the reach of the person (9) sitting on the driving seat (20) of the vehicle (6), second graphics data are shown, and
- inputs are acquired via a touch-sensitive surface that is formed on the second display area (5) and the first and/or second graphics data are altered according to these inputs, wherein
- in an input procedure comprising several single input steps, after a single input step, first graphics data are generated for a preview assigned to the input procedure and
- the first graphics data are displayed on the first display area (3) for the preview,
**characterized in that**
- on the second display area (5), in an input procedure, a first window (16-1) with buttons (17) for inputs is displayed and at least one second window (16-2) in which graphic objects assigned to the inputs are contained is displayed truncated, and
- through an operating procedure the window (16-2) displayed truncated is displayable completely and the first window (16-1) is displayable truncated.

2. The operating method according to claim 1,
**characterized in that**
the input procedure relates to a search within a set of data records, **in that** the hit set changes with each single input step and **in that** the preview assigned to the input procedure visualizes the hit set after the last single input step.

3. The operating method according to claim 2,
**characterized in that**
- on the first display area (3) a geographic map (12) is displayed and on the second display area (5) buttons (17) for inputting a navigation system (11-1) are displayed,
- after each single input step, objects of the navigation system (11-1) are detected that arise from the preceding single input steps of the input procedure, and
- the geographic positions of the detected objects of the navigation system (11-1) in the geographical map (12) are displayed on the first display area (3).

4. The operating method according to one of the preceding claims,
**characterized in that**
a list of list entries that has been detected according to the previous single input steps is displayed in the window (16-2) that is displayed truncated.

5. The operating method according to one of the preceding claims,
**characterized in that**
on the second display area (5) several truncated windows (16-2, 16-3) are shown.

6. The operating method according to one of the preceding claims,
**characterized in that**
buttons (17) in a window (16-2, 16-3) that is displayed truncated are operable.

7. An operating system in a road vehicle (6) with
- a first display area (3) that is arranged in the interior of the vehicle (6) in the field of vision of a person (9) sitting on a driving seat (20) of the vehicle (6),
- a second display area (5) that is arranged separate from the first display area (3) in the interior of the vehicle (6) within the reach of the person (9) sitting on the driving seat (20) of the vehicle (6) and on which a touch-sensitive surface for inputs of a user is formed, and
- a control device (1) that is coupled with the first and the second display area (3, 5) by means of which graphics data are generatable for the displays on the display areas (3, 5) and by means of which inputs are acquirable via the touch-sensitive surface, wherein
- in an input procedure, which comprises several single input steps, by means of the control device (1) during or after a single input step, for the first display area (3) graphics data for a preview assigned to the input procedure are generatable and displayable,
**characterized in that**
- on the second display surface (5), in an input procedure, a first window (16-1) with buttons (17) for inputs is displayable and at least one second window (16-2) in which graphic objects assigned to the inputs are contained is displayed truncated, and
- through an operating procedure the window (16-2) displayed truncated is displayable completely and the first window (16-1) is displayable truncated.

8. The operating system according to claim 7,
**characterized in that**
the first display area (3) is so arranged in the interior of the vehicle (6) that the line of vision of the person (9), sitting on a driving seat (20) of the vehicle (6) deviates by an angle range in a vertical plane arranged in the vehicle longitudinal direction by a certain angle α downwards from the horizontal which intersects the eyes of the driver that is less than 30°.

## Revendications

1. Procédé de commande dans un véhicule routier (6), dans lequel
- dans une première zone d'affichage (3), qui est agencée à l'intérieur du véhicule (6) dans le champ de vision d'une personne (9), qui est assise sur un siège conducteur (20) du véhicule (6), des premières données graphiques sont affichées,
- dans une deuxième zone d'affichage (5), qui est agencée, séparément de la première zone d'affichage (3), à portée de la personne (9), qui est assise sur le siège conducteur (20) du véhicule (6), des deuxièmes données graphiques sont affichées, et
- des saisies sur une surface tactile, qui est configurée dans la deuxième zone d'affichage (5), sont détectées et les premières et/ou deuxièmes données graphiques sont modifiées en fonction de ces saisies, dans lequel
- pendant une opération de saisie, qui comprend plusieurs étapes de saisie individuelle, après une étape de saisie individuelle, des premières données graphiques, qui sont attribuées à l'opération de saisie, sont générées pour une prévisualisation, et
- les premières données graphiques pour la prévisualisation sont affichées dans la première zone d'affichage (3),
**caractérisé en ce que**
- dans la deuxième zone d'affichage (5), pendant une opération de saisie, une première fenêtre (16-1) avec des touches (17) pour effectuer des saisies est affichée et au moins une deuxième fenêtre (16-2) est affichée sous forme tronquée, dans laquelle des objets graphiques, qui sont attribués aux saisies, sont contenus, et
- à travers une opération de commande, la fenêtre affichée sous forme tronquée (16-2) est entièrement affichée et la première fenêtre (16-1) est affichée sous forme tronquée.

2. Procédé de commande selon la revendication 1,
**caractérisé en ce que**
l'opération de saisie concerne une recherche au sein d'une quantité de données, **en ce que** le nombre de réponses pertinentes change avec chaque étape de saisie individuelle et **en ce que** la prévisualisation attribuée à l'opération de saisie visualise le nombre de réponses pertinentes après la dernière étape de saisie individuelle.

3. Procédé de commande selon la revendication 2,
**caractérisé en ce que**
- dans la première zone d'affichage (3), une carte géographique (12) est affichée et dans la deuxième zone d'affichage (5), des touches (17) sont affichées pour une saisie d'un système de navigation (11-1),
- après chaque étape de saisie individuelle, des objets du système de navigation (11-1), qui résultent des étapes de saisie individuelle précédentes de l'opération de saisie, sont déterminés, et
- les positions géographiques des objets déterminés du système de navigation (11-1) sont affichées sur la carte géographique (12) dans la première zone d'affichage (3).

4. Procédé de commande selon l'une des revendications précédentes,
**caractérisé en ce que**,
dans la fenêtre affichée sous forme tronquée (16-2), une liste, qui a été déterminée en fonction des étapes de saisie individuelle précédentes, est affichée avec des éléments de liste.

5. Procédé de commande selon l'une des revendications précédentes,
**caractérisé en ce que**,
dans la deuxième zone d'affichage (5), plusieurs fenêtres tronquées (16-2, 16-3) sont représentées.

6. Procédé de commande selon l'une des revendications précédentes,
**caractérisé en ce que**
des touches (17) peuvent être commandées dans une fenêtre affichée sous forme tronquée (16-2, 16-3).

7. Système de commande dans un véhicule routier (6) avec
- une première zone d'affichage (3), qui est agencée à l'intérieur du véhicule (6) dans le champ de vision d'une personne (9), qui est assise sur un siège conducteur (20) du véhicule (6),
- une deuxième zone d'affichage (5), qui est agencée, séparément de la première zone d'affichage (3) à l'intérieur du véhicule (6) à portée de la personne (9), qui est assise sur le siège conducteur (20) du véhicule (6), et sur laquelle une surface tactile est configurée pour les saisies d'un utilisateur, et
- un dispositif de contrôle (1), qui est couplé avec la première et la deuxième zone d'affichage (3, 5), au moyen duquel des données graphiques peuvent être générées pour les affichages dans les zones d'affichage (3, 5) et au moyen duquel des saisies peuvent être détectées sur la surface tactile, dans lequel
- pendant une opération de saisie, qui comprend plusieurs étapes de saisie individuelle, au moyen du dispositif de contrôle (1), pendant ou après une étape de saisie individuelle pour la première zone d'affichage (3), des données graphiques peuvent être générées et affichées pour une prévisualisation attribuée à l'opération de saisie,
**caractérisé en ce que**
- dans la deuxième zone d'affichage (5), pendant une opération de saisie, une première fenêtre (16-1) avec des touches (17) peut être affichée pour des saisies et au moins une deuxième fenêtre (16-2) peut être affichée sous forme tronquée, dans laquelle des objets graphiques, qui sont attribués aux saisies, sont contenus, et
- à travers une opération de commande, la fenêtre affichée sous forme tronquée (16-2) peut être affichée entièrement et la première fenêtre (16-1) peut être affichée sous forme tronquée.

8. Système de commande selon la revendication 7,
**caractérisé en ce que**
la première zone d'affichage (3) est agencée à l'intérieur du véhicule (6), de sorte que la direction du regard de la personne (9), qui est assise sur un siège conducteur (20) du véhicule (6), diffère d'une plage angulaire dans un plan vertical, agencé dans la direction de la longueur du véhicule, d'un angle α, qui est inférieur à 30°, vers le bas à partir d'une ligne horizontale, qui coupe les yeux du conducteur.
